# EUROPÄISCHE PATENTANMELDUNG

(11) **EP 4 455 885 A1**
(43) Veröffentlichungstag der Anmeldung: **30.10.2024**
(21) Anmeldenummer: 23170831.4
(22) Anmeldetag: 28.04.2023
(51) Int. Cl.: G06F 11/14, G06F 11/16, G06F 21/57, G06F 11/20

(54) **SICHERES BACKUP-VERFAHREN**

(71) Anmelder: Siemens Aktiengesellschaft, 80333 München (DE)
(72) Erfinder: Feist, Christian Peter, 80689 München (DE); Heintel, Markus, 81377 München (DE); Mager, Christian, 90765 Fürth (DE); Scheuermann, Uwe, 80796 München (DE); Seeger, Guido, 91083 Baiersdorf (DE); Wagner, Ralf, 91058 Erlangen (DE); Zeschg, Thomas, 81543 München (DE)
(74) Vertreter: Siemens Patent Attorneys

(57) **Zusammenfassung**

Vorgeschlagen wird ein technisches System mit wenigstens einer ersten Hardwarekomponente (1, 12) und wenigstens einer zweiten Hardwarekomponente (2), wobei der ersten Hardwarekomponente (1) digitale Informationen (6, 9, 7a, 10a) zugeordnet sind, und wobei durch ein Sicherungsverfahren erzeugte und mit den digitalen Informationen (6, 9, 7a, 10a) im Wesentlichen inhaltsgleiche digitale Informationen (6, 9, 7a, 10a) eine kryptographische Bindung an die zweite Hardwarekomponente (2) des technischen Systems aufweisen, derart, dass bei einem Ersetzen der ersten Hardwarekomponente (1) durch eine neue erste Hardwarekomponente (12) eine erneute Zuordnung der digitalen Informationen (6, 9, 7a, 10a) zu der ersten Hardwarekomponente (12) unter Verwendung der kryptographischen Bindung der digitalen Informationen (6, 9, 7a, 10a) an die zweite Hardwarekomponente (2) erfolgt.

## Beschreibung

Die Erfindung betrifft ein Verfahren zum Austausch einer ersten Hardwarekomponente eines technischen Systems. Außerdem betrifft die Erfindung ein technisches System mit wenigstens einer ersten Hardwarekomponente und wenigstens einer zweiten Hardwarekomponente. Zudem betrifft die Erfindung ein Leitsystem für eine technische Anlage, insbesondere Fertigungs- oder Prozessanlage.

Da Ausfallzeiten von industriellen Maschinen (z.B. Werkzeugmaschinen, Automatisierungssysteme) generell sehr teuer sind und dadurch so kurz wie möglich gehalten werden müssen, sollte der Austausch einer defekten Komponente einer Maschinensteuerung so schnell und unkompliziert wie möglich gestaltet werden. Dazu muss insbesondere sichergestellt werden, dass Software und Konfiguration auf dem gleichen Stand sind wie vor dem Austausch der Komponente. Um das zu erreichen, werden Backup-Abbilder der einzelnen Software-Komponenten (Programmbinärdateien, Konfigurationsdaten, etc.) erstellt und im Ersatzteil-Fall wieder eingespielt.

Eine solche Wiederherstellung wird aber dann erschwert, wenn die auf den Komponenten laufende Software oder die von den Komponenten gespeicherten Daten kryptographisch an die spezifische Hardware gebunden sind. Die erstellten Backup-Abbilder können dann nur auf den jeweiligen Komponenten wiederhergestellt werden, auf denen sie ursprünglich erzeugt wurden. Als Konsequenz wird aktuell auf erhöhte Sicherheit von Backup-Abbildern verzichtet, d.h. die Bindung im Backup aufgehoben, was z.B. ein beliebiges Klonen von Komponenten ermöglicht.

Bekannt sind RAID-Systeme, welche vorwiegend zum redundanten Speichern von Daten verwendet werden, um je nach konkreter Konfiguration eine unterschiedlich hohe Ausfallsicherung zu gewährleisten (https://de.wikipedia.org/wiki/RAID). Von Trusted Platform Modules (TPM) ist bekannt, dass Schlüssel prinzipiell von einer Hierarchie in eine andere kopiert werden können. Dabei kann die zweite Hierarchie entweder auf demselben TPM oder einen anderen TPM sein. Der Vorgang wird beim TPM 2.0 als "duplication" bezeichnet, beim TPM 1.2 wurde er noch "migration" genannt. Die Verwendungszwecke stellen hauptsächlich die Erstellung von Backups und die Bereitstellung eines Schlüssels auf mehreren Geräten dar.

Von der Speicherverschlüsselungstechnologie (RAM) AMD SEV ist bekannt, dass von auf einem Host laufenden virtuellen Maschinen Schnappschüsse (Snap Shots) erzeugt oder die virtuellen Maschinen live zwischen Hosts migriert werden können. Zur Aufrechterhaltung der Speicherverschlüsselung muss jedoch die Zielhardware in beiden Fällen vorab bekannt sein (vgl. 1.3.3 Snapshot and Migrate:
https://www.amd.com/system/files/TechDocs/55766_SEV-KM_API_Specification.pdf)

Es ist daher eine Aufgabe der vorliegenden Erfindung, Backup-Abbilder von Komponenten eines technischen Systems wie einer industriellen Maschine so erstellen zu können, dass sie kryptographisch an das technische System gebunden sind und im Ersatzteil-Fall nur dort wiederhergestellt werden können, trotzdem aber die Komponenten des technischen Systems, beispielsweise die der Maschinensteuerung, getauscht werden können.

Diese Aufgabe wird gelöst durch ein Verfahren zum Austausch einer ersten Hardwarekomponente eines technischen Systems, wobei der ersten Hardwarekomponente digitale Informationen zugeordnet sind, mit den Merkmalen des Anspruchs 1. Zudem wird die Aufgabe gelöst durch ein technisches System mit wenigstens einer ersten Hardwarekomponente und wenigstens einer zweiten Hardwarekomponente mit den Merkmalen des Anspruchs 12. Weiterhin wird die Aufgabe gelöst durch ein Leitsystem für ein technisches System, insbesondere Fertigungs- oder Prozessanlage, gemäß Anspruch 13. Vorteilhafte Weiterbildungen ergeben sich aus den abhängigen Ansprüchen.

Das erfindungsgemäße Verfahren zum Austausch einer ersten Hardwarekomponente eines technischen Systems, wobei der ersten Hardwarekomponente digitale Informationen zugeordnet sind, umfasst die folgenden Verfahrensschritte:
a) Kryptographisches Binden der digitalen Informationen an eine zweite Hardwarekomponente des technischen Systems,
b) Ersetzen der ersten Hardwarekomponente durch eine neue erste Hardwarekomponente,
c) Erneute Zuordnung der digitalen Informationen zu der ersten Hardwarekomponente unter Verwendung der kryptographischen Bindung der digitalen Informationen an die zweite Hardwarekomponente.

Bei dem technischen System kann es sich um eine technische Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche technischen Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen, Kraftwerke zur Energieerzeugung oder sonstige Maschinen sind ebenso von dem Begriff des technischen Systems umfasst.

Es wird vorausgesetzt, dass das technische System wenigstens zwei Hardwarekomponenten umfasst. Der ersten Hardwarekomponente sind digitale Informationen zugeordnet. Digitale Informationen sind dabei in der breitesten Auslegung Informationen, die in einem binären Format codiert sind und in einem Datenspeicher hinterlegt sind. Es kann sich bei den digitalen Informationen bevorzugt um eine Konfiguration der ersten Hardwarekomponente oder ein von der ersten Hardwarekomponente zu bearbeitendes Ablaufprogramm handeln. Die Informationen sind der ersten Hardwareeinheit zugeordnet. Dies bedeutet, dass sie die erste Hardwareeinheit selbst oder einen Betrieb der ersten Hardwareeinheit in dem technischen System betreffen.

Die erste Hardwarekomponente soll im Rahmen des erfindungsgemäßen Verfahrens ersetzt werden, da sie beispielsweise defekt ist. Der neuen ersten Hardwarekomponente sollen daraufhin die digitalen Informationen zugeordnet werden, die der alten ersten Hardwareeinheit zugeordnet waren. Hierzu wurden die digitalen Informationen zuvor an eine zweite Hardwarekomponente des technischen Systems kryptographisch gebunden. Damit wird sichergestellt, dass die digitalen Informationen manipulationssicher sind, da die kryptographische Bindung zwischen den digitalen Informationen und der zweiten Hardwareeinheit von dem Austausch der ersten Hardwareeinheit nicht betroffen ist. Diese kryptographische Bindung kann nun bei der erneuten Zuordnung der digitalen Informationen an die (neue) erste Hardwareeinheit verwendet werden. Die Ausfallzeit des technischen Systems wird dabei geringgehalten und die kryptographische Bindung an die zweite Hardwareeinheit erschwert ein beliebiges Klonen der ersten Hardwarekomponente.

Es ist selbstverständlich, dass die zweite Hardwarekomponente in analoger Weise eine kryptographische Bindung an die erste Hardwarekomponente (oder an eine oder mehrere weitere Hardwarekomponenten) aufweisen kann, die sich bei einem Austausch der zweiten Hardwarekomponente vergleichbar vorteilhaft erweisen kann.

Bevorzugt werden die digitalen Informationen vor dem Verfahrensschritt a durch ein Sicherungsverfahren aus inhaltsgleichen, der ersten Hardwarekomponente zugeordneten digitalen Informationen erzeugt. Man spricht in diesem Zusammenhang auch von einem Backup der inhaltsgleichen digitalen Informationen, die der ersten Hardwarekomponente zugeordnet sind. Das Verfahren lautet demnach dabei wie folgt:
- Erzeugen einer Sicherung bzw. eines Backups von digitalen Informationen, die der ersten Hardwarekomponente zugeordnet sind
- Kryptographisches Binden der zuvor durch das Sicherungsverfahren erzeugten digitalen Informationen (Backup) an eine zweite Hardwarekomponente des technischen Systems,
- Ersetzen der ersten Hardwarekomponente durch eine neue erste Hardwarekomponente,
- Erneute Zuordnung der zuvor durch das Sicherungsverfahren erzeugten digitalen Informationen (Backup) zu der ersten Hardwarekomponente unter Verwendung der kryptographischen Bindung der digitalen Informationen (Backup) an die zweite Hardwarekomponente.

Die digitalen Informationen bzw. das durch das Sicherungsverfahren erzeugte Backup der digitalen Informationen kann in einem Speicher der zweiten Hardwarekomponente hinterlegt sein. Es ist aber auch möglich, die digitalen Informationen bzw. das durch das Sicherungsverfahren erzeugte Backup der digitalen Informationen in einem anderen Speicher innerhalb des technischen Systems oder außerhalb des technischen Systems in einer cloudbasierten Umgebung zu hinterlegen.

Im Rahmen einer bevorzugten Weiterbildung der Erfindung erfolgt das kryptographische Binden der digitalen Informationen (bzw. des Backups der digitalen Informationen) an die zweite Hardwarekomponente durch eine Verschlüsselung (bevorzugt mit zusätzlichem Integritätsschutz) der digitalen Informationen selbst oder eines Speichers, in dem die digitalen Informationen hinterlegt sind. Alternativ kann die kryptographische Bindung der digitalen Informationen an die zweite Hardwarekomponente mit einer digitalen Signatur oder einem MAC (Message Authentication Code) hergestellt werden.

Bevorzugt ist der Speicher, in dem die inhaltsgleichen digitalen Informationen hinterlegt sind, auf der ersten Hardwarekomponente, und der Speicher, auf dem die durch das Sicherungsverfahren erzeugten digitalen Informationen (also das Backup) hinterlegt sind, auf der zweiten Hardwarekomponente realisiert sind, wobei das kryptographische Binden der durch das Sicherungsverfahren erzeugten digitalen Informationen an die zweite Hardwarekomponente durch für die jeweilige Hardwarekomponente spezifische Schlüssel erfolgt.

Der Kommunikationskanal, der zum Austausch von Informationen zwischen der ersten Hardwarekomponente und der zweiten Hardwarekomponente verwendet wird, ist bevorzugt ebenfalls durch ein (nicht notwendigerweise typgleiches) kryptographisches Verfahren geschützt, um Angriffsversuchen begegnen zu können.

Vorteilhafterweise erfolgt das kryptographische Binden der durch das Sicherungsverfahren erzeugten digitalen Informationen an die zweite Hardwarekomponente durch für die jeweilige Hardwarekomponente spezifische Schlüssel, wobei der für die zweite Hardwareeinheit spezifische Schlüssel zum Binden der durch das Sicherungsverfahren erzeugten digitalen Informationen (also an das Backup) der ersten Hardwareeinheit an die zweite Hardwareeinheit verwendet wird.

Zusätzlich kann ein kryptographisches Binden der digitalen Informationen (bzw. des Backups) an eine dritte Hardwarekomponente des technischen Systems erfolgen, wobei die erneute Zuordnung der digitalen Informationen zu der ersten Hardwarekomponente nach dem Ersetzen der ersten Hardwarekomponente unter Verwendung der kryptographischen Bindung der digitalen Informationen an die zweite Hardwarekomponente und an die dritte Hardwarekomponente erfolgt. Durch die Bindung an zwei zusätzliche Hardwarekomponenten kann die Sicherheit weiter erhöht werden, ohne den Aufwand hierfür signifikant erhöhen zu müssen.

Es kann allgemein gesprochen ein kryptographisches Binden der digitalen Informationen an m weitere Hardwarekomponenten des technischen Systems erfolgen, wobei m eine natürliche Zahl größer als Eins darstellt, und wobei die erneute Zuordnung der digitalen Informationen zu der ersten Hardwarekomponente nach dem Ersetzen der ersten Hardwarekomponente unter Verwendung der kryptographischen Bindung der digitalen Informationen an eine, für ein technisches System definierbare, Teilmenge der m weiteren Hardwarekomponenten erfolgt. Die digitalen Informationen (bzw. das Backup) können dabei jeweils vollständig an die zweiten Hardwarekomponenten gebunden werden, was die Sicherheit weiter erhöht. Es ist aus Ressourcengründen ebenfalls vorteilhaft, wenn jeweils nur ein bestimmter Teil der digitalen Informationen bzw. deren Backups an die weiteren Hardwarekomponente gebunden wird. Jeder weiteren Hardwarekomponente kann dabei ein bestimmter Teil der digitalen Informationen zugewiesen werden. Für die erneute Zuordnung der verteilten Informationen zu der ersetzten ersten Hardwarekomponente können dabei an sich bekannte Verfahren zum Einsatz kommen. Insbesondere müssen dabei nicht alle m weiteren Hardwarekomponenten verwendet werden. Es kann auch nur ein Teil der m weiteren Hardwarekomponenten ausreichen, um die erneute Zuordnung der digitalen Informationen bzw. des Backups zu realisieren.

Die zuvor formulierte Aufgabe wird zudem gelöst durch ein technisches System mit wenigstens einer ersten Hardwarekomponente und wenigstens einer zweiten Hardwarekomponente, wobei der ersten Hardwarekomponente digitale Informationen zugeordnet sind, und wobei durch ein Sicherungsverfahren erzeugte und mit den digitalen Informationen im Wesentlichen inhaltsgleiche digitale Informationen eine kryptographische Bindung an die zweite Hardwarekomponente des technischen Systems aufweisen, derart, dass bei einem Ersetzen der ersten Hardwarekomponente durch eine neue erste Hardwarekomponente eine erneute Zuordnung der digitalen Informationen zu der ersten Hardwarekomponente unter Verwendung der kryptographischen Bindung der digitalen Informationen an die zweite Hardwarekomponente erfolgt.

Das technische System weist bevorzugt eine Sicherheitsinstanz auf, insbesondere eine Zertifizierungsstelle und/oder eine Registrierungsstelle im Rahmen einer Public-Private-Key Infrastruktur.

Die Aufgabe wird zudem gelöst durch ein Leitsystem für eine technische Anlage, insbesondere Fertigungs- oder Prozessanlage oder ein Motor als technische Anlage, welches Leitsystem wenigstens einen Operator Station Server als erste Hardwarekomponente und wenigstens ein Automatisierungsgerät als zweite Hardwarekomponente umfasst, wobei das technische System wie zuvor erläutert ausgebildet ist.

Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

Das Leitsystem kann zusätzlich wenigstens einen Operator Station Client aufweisen, welcher von dem Operator für die Bedienung und Beobachtung des technischen Systems verwendbar ist, wobei der Operator Station Server dazu ausgebildet ist, die entsprechenden Visualisierungsinformationen zu erzeugen und an den Operator Station Client zu übertragen.

Unter einem "Operator Station Server" wird vorliegend ein Server verstanden, der zentral Daten eines Bedien- und Beobachtungssystems sowie in der Regel Alarm- und Messwertarchive eines (Prozess-)Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: eine erste und eine zweite Hardwarekomponente gemäß einem ersten Aspekt in einer schematischen Darstellung;
- FIG 2: die erste und die zweite Hardwarekomponente gemäß einem zweiten Aspekt in einer schematischen Darstellung; und
- FIG 3: die erste Hardwarekomponente und eine Mehrzahl weiterer Hardwarekomponenten in einer schematischen Darstellung.

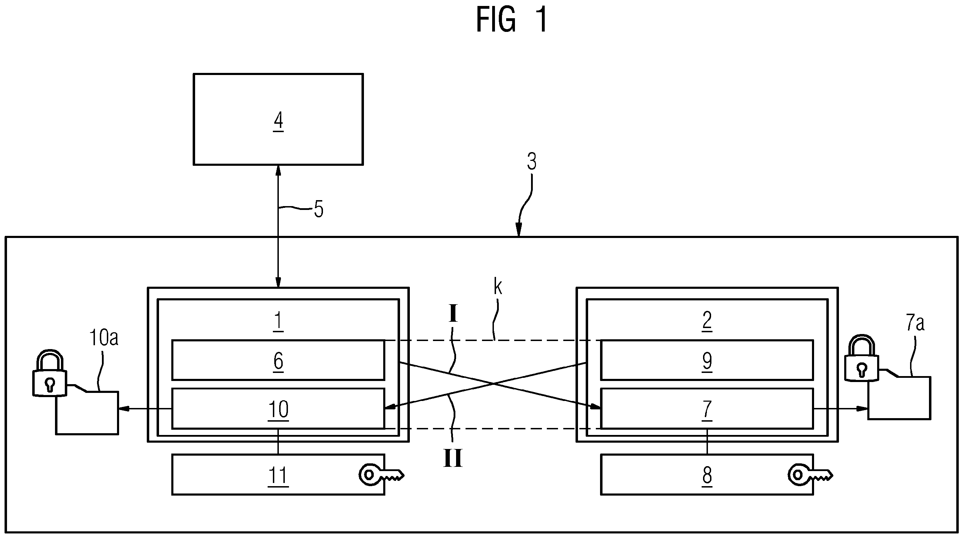

In FIG 1 sind ein Operator Station Server 1 als eine erste Hardwarekomponente und ein Automatisierungsgerät 2 als eine zweite Hardwarekomponente eines Leitsystems 3 als ein technisches System für eine technische Anlage schematisch dargestellt. Das Leitsystem 3 umfasst neben dem Operator Station Server 1 und dem Automatisierungsgerät 2 einen Operator Station Client 4, mittels dessen ein Operator zum Zwecke des Bedienens und Beobachtens der technischen Anlage auf das Leitsystem zugreifen kann. Der Operator Station Server 1 und der Operator Station Client 4 sind über einen Terminalbus 5 miteinander und optional mit nicht dargestellten weiteren Komponenten des Leitsystems 3 wie einem Archivserver verbunden.

Auf dem Operator Station Server 1 ist sind Konfigurationsdaten 6 als digitale Informationen hinterlegt, die für einen Betrieb des Operator Station Servers 1 in dem Leitsystem 3 relevant sind. In einem ersten Schritt I werden die Konfigurationsdaten 6 des Operator Station Servers 1 durch ein an sich bekanntes Sicherungsverfahren dupliziert und an einen Speicher 7 des Automatisierungsgeräts 2 übermittelt und dort als ein digitales Backup 7a hinterlegt. Das Backup 7a der Konfigurationsdaten 6 des Operator Station Servers 1 wird kryptographisch an das Automatisierungsgerät 2 gebunden. Dies erfolgt durch eine Verschlüsselung des Datenspeichers 7 unter Nutzung eines Hardware Trust Anchors 8 des Automatisierungsgerätes 2.

Analog dazu werden in einem zweiten Schritt II digitale Informationen 9 des Automatisierungsgerätes 2 durch ein an sich bekanntes Sicherungsverfahren dupliziert und an einen Speicher 10 des Operator Station Servers 1 übermittelt und dort als ein digitales Backup 10a hinterlegt. Das Backup 10a der digitalen Informationen 9 des Automatisierungsgerätes 2 wird kryptographisch an den Operator Station Server 1 gebunden. Dies erfolgt durch eine Verschlüsselung des Datenspeichers 10 unter Nutzung eines Hardware Trust Anchors 11 des Operator Station Servers 1.

Der Übertragungskanal K zwischen dem Operator Station Server 1 und dem Automatisierungsgerät 2 ist kryptographisch abgesichert, um Manipulationen vorzubeugen. Hierfür kann beispielsweise ein TLS-basiertes Kommunikationsverfahren zum Einsatz kommen.

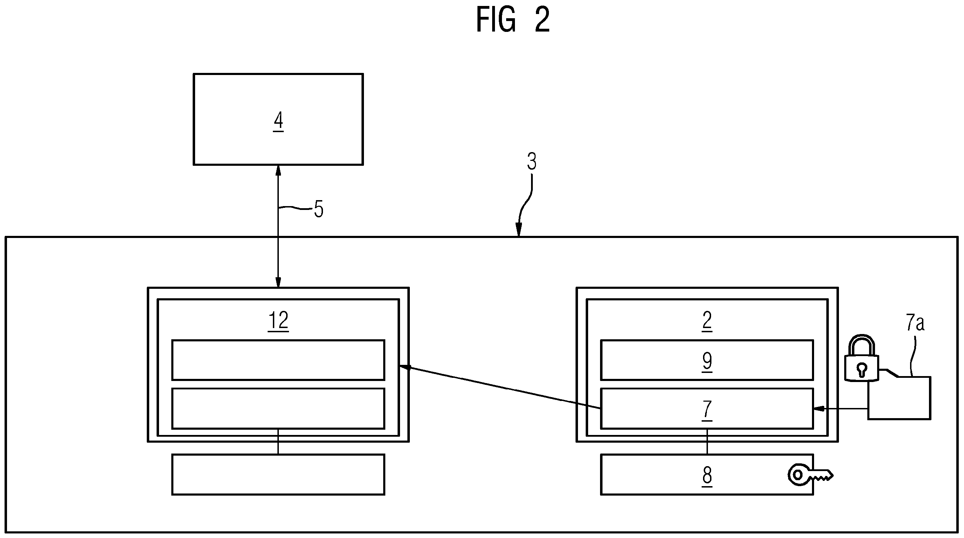

Bedingt durch einen Ausfall des Operator Station Servers 1 wird dieser im Anschluss ausgetauscht. Die im Folgenden erläuterten Verfahrensschritte sind in FIG 2 schematisch dargestellt. Der neue Operator Station Server 12 weist lediglich seine Werkseinstellungen auf und verfügt nicht über die für seinen Betrieb in dem Leitsystem relevanten Konfigurationsdaten 6. Daher wird das Backup 7a aus dem Speicher 7 des Automatisierungsgerätes 2 an den neuen Operator Station Server 12 übertragen und dem Operator Station Server 12 zugeordnet. Unter Verwendung des Hardware Trust Anchors 8 des Automatisierungsgerätes 2 wird das Backup 7a dabei entschlüsselt. Das Backup 10a des Automatisierungsgerätes 2 war in diesem Fall in dem Speicher 10 des alten Operator Station Servers 1 und muss neu erzeugt werden. Es ist aber auch möglich, dass die Backups 7a, 10a beispielsweise in einer cloudbasierten Umgebung hinterlegt sind.

In einer Variante wird zum Berechnen der Signatur nicht das komplette Backup-Abbild 7a der Konfigurationsdaten 6 an das Automatisierungsgerät 2 als zweite Hardwarekomponente übertragen, sondern nur ein Hashwert davon. Die berechnete Signatur wird an den Speicher übergeben, in dem das Backup-Abbild 7a hinterlegt ist (was nicht notwendigerweise der Speicher 7 des Automatisierungsgerätes 2 sein muss).

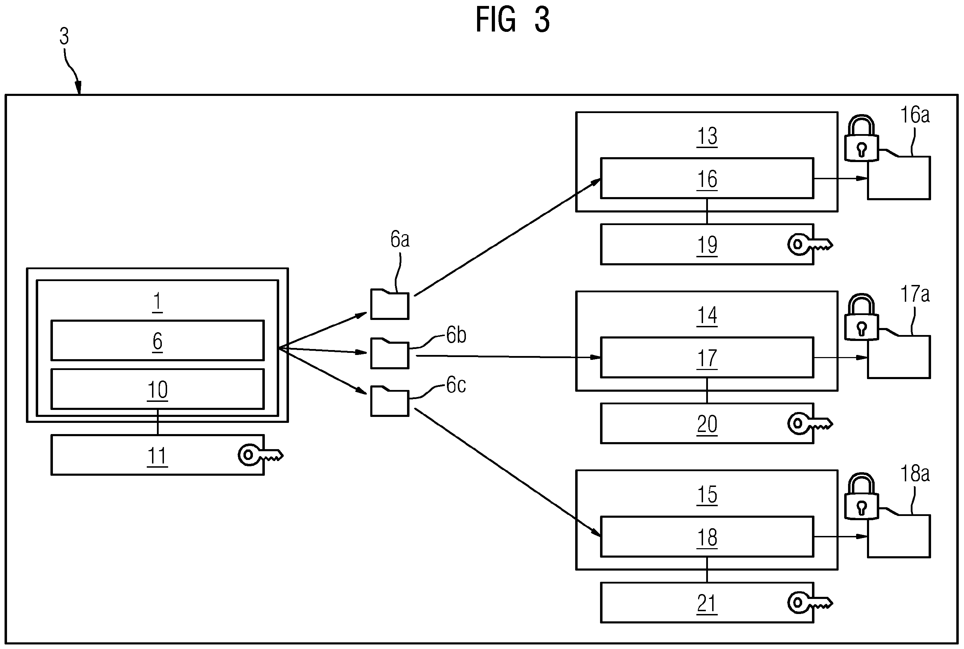

FIG 3 zeigt die Aufteilung der Konfigurationsdaten 6 in drei Teilpakete 6a, 6b, 6c. Das erste Teilpaket 6a wird als Backup 16a in einem Speicher 16 einer dritten Hardwarekomponente 13 hinterlegt. Das zweite Teilpaket 6b wird als Backup 17a in einem Speicher 17 einer vierten Hardwarekomponente 14 und das dritte Teilpaket 6c wird als Backup 18a in einem Speicher 18 einer fünften Hardwarekomponente 15 hinterlegt. Dies kann, wie von RAID-Systemen bekannt ist (z.B. RAID 5), mit einem definierten Muster und zusätzlichen Prüfsummen erreicht werden. Das hat den Vorteil, dass je nach Konfiguration eine bestimmte Anzahl der vorhandenen weiteren Hardwarekomponenten 13, 14, 15 benötigt wird, um die Konfigurationsdatei 6 aus den Backupteilen 16a, 16b, 16c für einen ausgetauschten Operator Station Server 1 wiederherzustellen.

Die Zerteilung der Konfigurationsdaten 6 kann entweder von dem Operator Station Server 1 selbst vorgenommen und diese auf die anderen Hardwarekomponenten 13, 14, 15 verteilt werden, oder von einer zentralen Backup-Komponente (nicht dargestellt). Das finale Backup-Abbild kann in Form der Einzelteile 16a, 16b, 16c auf den jeweiligen Hardwarekomponenten 13, 14, 15 gespeichert werden (wie in FIG 3 dargestellt). Es ist aber auch möglich, ein Manifest zu erstellen, welches die Verteilung auf die Einzelkomponenten beschreibt. Das zusammengefügte Abbild kann wiederum lokal außerhalb der Maschine, in einem Backend-System oder in der Cloud gespeichert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, welcher durch die Ansprüche in Verbindung mit der Beschreibung definiert wird, zu verlassen.

## Patentansprüche

1. Verfahren zum Austausch einer ersten Hardwarekomponente (1, 12) eines technischen Systems, wobei der ersten Hardwarekomponente (1) digitale Informationen zugeordnet sind, das Verfahren umfassend:
a) Kryptographisches Binden der digitalen Informationen (6, 7a) an eine zweite Hardwarekomponente (2) des technischen Systems,
b) Ersetzen der ersten Hardwarekomponente (1) durch eine neue erste Hardwarekomponente (12),
c) Erneute Zuordnung der digitalen Informationen (6, 7a) zu der ersten Hardwarekomponente (12) unter Verwendung der kryptographischen Bindung der digitalen Informationen (6, 7a) an die zweite Hardwarekomponente (2).

2. Verfahren nach Anspruch 1, bei dem die digitalen Informationen (6, 7a) vor dem Verfahrensschritt a durch ein Sicherungsverfahren aus inhaltsgleichen, der ersten Hardwarekomponente (1, 12) zugeordneten digitalen Informationen (6, 7a) erzeugt werden.

3. Verfahren nach Anspruch 1 oder 2, bei dem die digitalen Informationen (6, 7a) eine Konfiguration der ersten Hardwarekomponente (1, 12) oder ein von der ersten Hardwarekomponente (1, 12) zu bearbeitendes Ablaufprogramm umfassen.

4. Verfahren nach einem der vorangegangenen Ansprüche, bei dem die digitalen Informationen (6, 7a) in einem Speicher (7) der zweiten Hardwarekomponente (2) hinterlegt sind.

5. Verfahren nach einem der Ansprüche 1 bis 4, bei dem die digitalen Informationen (6, 7a) außerhalb der zweiten Hardwarekomponente (2) in dem technischen System, höchst vorzugsweise in einer cloudbasierten Umgebung außerhalb des technischen Systems hinterlegt sind.

6. Verfahren nach einem der vorangegangenen Ansprüche, bei dem das kryptographische Binden der digitalen Informationen (6, 7a) an die zweite Hardwarekomponente (2) durch eine Verschlüsselung eines Speichers (7), in dem die digitalen Informationen (6, 7a) hinterlegt sind, erfolgt.

7. Verfahren nach Anspruch 2 und 6, bei dem der Speicher (10), in dem die inhaltsgleichen digitalen Informationen (6, 7a) hinterlegt sind, auf der ersten Hardwarekomponente (1, 12), und der Speicher (7), auf dem die durch das Sicherungsverfahren erzeugten digitalen Informationen (6, 7a) hinterlegt sind, auf der zweiten Hardwarekomponente (2) realisiert sind, wobei das kryptographische Binden der durch das Sicherungsverfahren erzeugten digitalen Informationen (6, 7a) an die zweite Hardwarekomponente (2) durch für die jeweilige Hardwarekomponente (1, 12) spezifische Schlüssel (8, 11) erfolgt.

8. Verfahren nach einem der vorangegangenen Ansprüche, bei dem ein Kommunikationskanal (K) zwischen der ersten Hardwarekomponente (1, 12) und der zweiten Hardwarekomponente (2) durch ein kryptographisches Verfahren geschützt ist.

9. Verfahren nach Anspruch 2, bei dem das kryptographische Binden der durch das Sicherungsverfahren erzeugten digitalen Informationen (6, 7a) an die zweite Hardwarekomponente (2) durch für die jeweilige Hardwarekomponente (1, 12) spezifische Schlüssel (8, 11) erfolgt, wobei der für die zweite Hardwarekomponente (2) spezifische Schlüssel (8) an die durch das Sicherungsverfahren erzeugten digitalen Informationen (6, 7a) gebunden wird.

10. Verfahren nach einem der vorangegangenen Ansprüche, bei dem zusätzlich ein kryptographisches Binden der digitalen Informationen (6, 7a) an eine dritte Hardwarekomponente (13) des technischen Systems erfolgt, und wobei die erneute Zuordnung der digitalen Informationen (6, 7a) zu der ersten Hardwarekomponente (1, 12) nach dem Ersetzen der ersten Hardwarekomponente (1, 12) unter Verwendung der kryptographischen Bindung der digitalen Informationen (6, 7a) an die zweite Hardwarekomponente (2) und an die dritte Hardwarekomponente (13) erfolgt.

11. Verfahren nach einem der Ansprüche 1 bis 9, bei dem zusätzlich ein kryptographisches Binden der digitalen Informationen an m weitere Hardwarekomponenten (13, 14, 15) des technischen Systems erfolgt, wobei m eine natürliche Zahl größer als Eins darstellt, und wobei die erneute Zuordnung der digitalen Informationen (6, 7a) zu der ersten Hardwarekomponente (1, 12) nach dem Ersetzen der ersten Hardwarekomponente (1, 12) unter Verwendung der kryptographischen Bindung der digitalen Informationen (6, 7a) an einen Teil der m weiteren Hardwarekomponenten (13, 14 ,15) erfolgt.

12. Technisches System mit wenigstens einer ersten Hardwarekomponente (1, 12) und wenigstens einer zweiten Hardwarekomponente (2), wobei der ersten Hardwarekomponente (1) digitale Informationen (6, 7a) zugeordnet sind, und wobei durch ein Sicherungsverfahren erzeugte und mit den digitalen Informationen (6, 7a) im Wesentlichen inhaltsgleiche digitale Informationen (6, 9, 7a, 10a) eine kryptographische Bindung an die zweite Hardwarekomponente (2) des technischen Systems aufweisen, derart, dass bei einem Ersetzen der ersten Hardwarekomponente (1) durch eine neue erste Hardwarekomponente (12) eine erneute Zuordnung der digitalen Informationen (6, 7a) zu der ersten Hardwarekomponente (12) unter Verwendung der kryptographischen Bindung der digitalen Informationen (6, 7a) an die zweite Hardwarekomponente (2) erfolgt.

13. Leitsystem (3) für eine technische Anlage, insbesondere Fertigungs- oder Prozessanlage, welches Leitsystem (3) wenigstens einen Operator Station Server als erste Hardwarekomponente (1, 12) und wenigstens ein Automatisierungsgerät als zweite Hardwarekomponente (2) umfasst, wobei das technische System gemäß Anspruch 12 ausgebildet ist.
